# EUROPEAN PATENT SPECIFICATION

(11) **EP 0 787 945 B1**
(45) Date of publication and mention of the grant of the patent: **12.12.2001**
(21) Application number: 97100976.6
(22) Date of filing: 22.01.1997
(51) Int. Cl.: F22B 1/28, A47J 27/04

(54) **Atmospheric pressure steam generator**
Dampferzeuger bei atmosphärischem Druck
Générateur de vapeur à pression atmosphérique

(30) Priority: 31.01.1996 IT PN960004 U
(43) Date of publication of application: 06.08.1997
(73) Proprietor: IRCA S.p.A., I-31020 S. Vendemiano, Treviso (IT)
(72) Inventor: Del Fabbro, Claudio, 33080 Porcia, Pordenone (IT)
(74) Representative: Grünecker, Kinkeldey, Stockmair & Schwanhäusser Anwaltssozietät

(56) References cited:
- EP-A- 0 165 187
- EP-A- 0 518 788
- DE-A- 3 519 224
- FR-A- 2 714 958
- GB-A- 623 154
- US-A- 1 420 693
- US-A- 2 880 300

## Description

The present invention relates an atmospheric pressure steam generator of the type as defined in the preamble portion of claim 1. Such an atmospheric pressure steam generator is known from US-A-2,880,300.

In the field of installations for commercial and/or community food preparation, or likewise in the field of catering equipment, widespread use is made of cooking ovens in which the food is heated and/or cooked by means of aquaeous steam produced at substantially atmospheric pressure in a steam generator associated to the oven chamber. The steam generator usually comprises a reservoir connected to the water mains system and to the oven chamber, and equipped with electric heater elements submerged in a body of water.

In a construction widely known in the trade, the reservoir of the steam generator is a box-shaped body made of stainless steel, and the heater elements, in the form of armoured resistor elements bent to a serpentine configuration, are provided with flanges for mounting them in the reservoir with the aid of releasable fastener means, particularly screws. The sensors for monitoring and controlling the water level are likewise mounted in the reservoir in the same manner. The interior of the reservoir is additionally in communication with ambient atmosphere through a discharge pipe permitting excessive steam pressure to be vented to the atmosphere.

For the steam generator to maintain its required functionality and reliability, it is known that the formation of calcine deposits has to be avoided. To this purpose the water provenient from the mains system is caused to flow through a ion-exchange resin decalcifier unit prior to being admitted into the steam generator. Even so, it is general pactice to periodically discharge from the steam generator residual water and calcareous sludge accumulated at the bottom of the reservoir. Regardless of these precautions, the formation of calcine deposits on the various components of the steam generator, such as the heater elements, level gauges etc., results after some time in a reduced efficiency or even failure of the steam generator. This renders the associated cooking oven useless, with the obvious economic losses, as long as the damaged components are not replaced.

From GB-A-623,154 there is known a steam generator where a pressure equalizing type connects the steam space in the boiler to the air space in the ball valve tank. This equalizing type serves the purpose to vent excess steam pressure to the outside in case of a sudden and considerable pressure rise above atmospheric pressure.

It is the object of the present invention to improve the construction of an atmospheric pressure steam generator of the type as indicated in the preamble portion if claim 1 so as to facilitate its maintenance and to thus reduce the risk of performance degradation and/or failure of its components in the course of extended use.

The above object is achieved by the subject matter of claim 1.

Preferred embodiments of the invention are defined in depending subclaims.

The invention will be more fully understood from the following description of a preferred embodiment thereof, given by way of example with reference to the accompanying drawings, wherein:

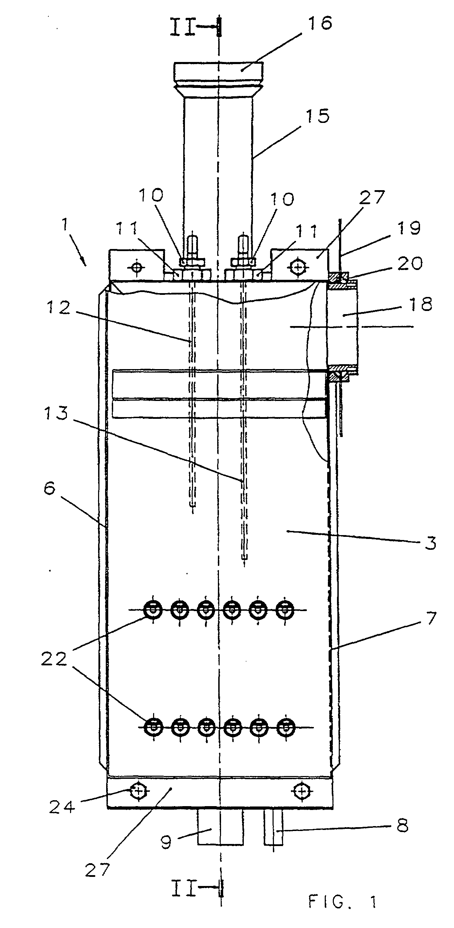

- fig. 1: shows a front elevation of a steam generator, and
- fig. 2: shows a sectional sideview of the steam generator taken along the line II-II in fig. 1.

The steam generator comprises a substantially box-shaped reservoir 1 made of stainless steel and having a bottom 2, front and rear walls 3 and 4, a top wall 5, and ledt and right sidewalls 6 and 7, respectively.

Bottom 2 is provided with two ports 8 and 9 connected respectively to the water supply mains system (with the interposition of appropriate valve means and decalcifier apparatus as generally known and therefore not illustrated), and to the sewage drain system of the building (through a likewise generally known and therefore not illustrated non-return valve).

Secured by means of retainer nuts 10 to top wall 5 at a position just inside front wall 3 are sensors 12, 13 of two devices for monitoring and controlling the water level LS-LI within reservoir 1. These monitoring and control devices, which may be of a generally known type and are therefore not illustrated, are effective in operation of the steam generator to ensure that the water within reservoir 1 does not rise above the higher level LS and does not drop below the lower level LI. A baffle 14 is secured to top wall 5 by nuts 11 and serves to protect sensors 12, 13 from turbulences caused by the violent evaporation of the water within reservoir 1.

Rising from top wall 5 of reservoir 1 is a pipe 15 having its upper end closed by a weighted lid 16 with a rod 17 extending downwards therefrom to somewhat below the lower water level LI in reservoir 1. Pipe 15 cooperates with lid 16 to act as a safety valve for venting excess steam pressure to atmosphere whenever the pressure within reservoir 1 inadvertently rises above the normal, i.e. atmospheric operating pressure. The purpose of rod 17, a characteristic feature of the invention, shall be explained later.

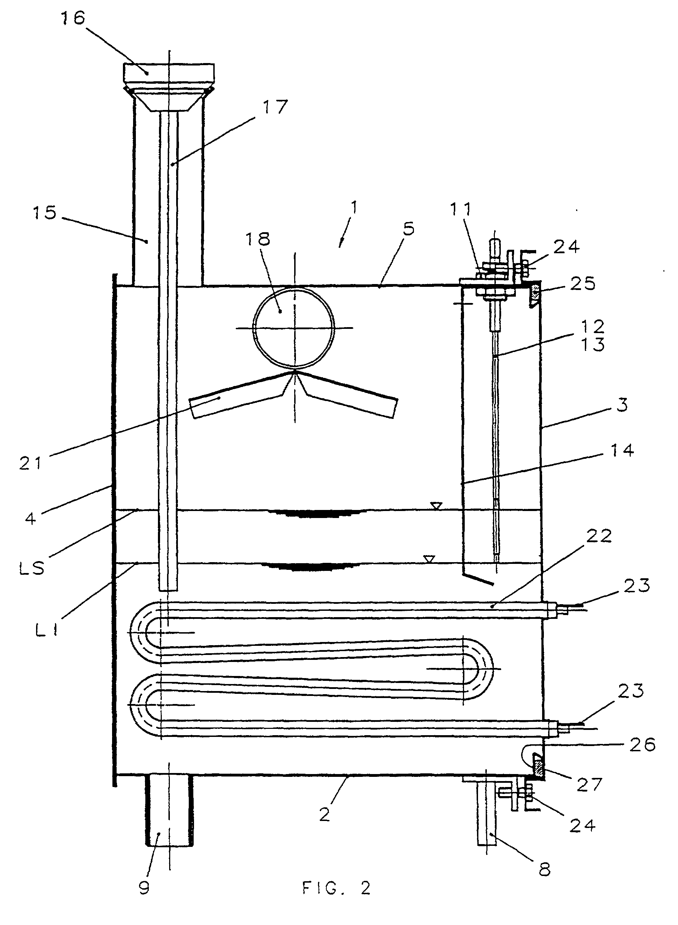

Right sidewall 7 is formed near its top with an opening 18 for the outflow of steam from the steam generator into the oven chamber 19 of the associated commercial cooking oven. To this purpose opening 18 is formed with a flange and provided with a circumferential sealing gasket 20. Mounted on right sidewall 7 below opening 18 is a baffle 21 (fig. 2) acting to retain water droplets carried along by the steam.

The front wall 3 of reservoir 1 is entirely formed as a detachable panel having fixedly secured thereto, specifically by welding, the casings of the water heating elements 22. In the generally known manner, heater elements 22 are composed of electric resistance elements of serpentine configuration and immersed in the water. The electric connections between the terminals 23 of heater elements 22 and the controls of the cooking oven are of a generally known construction and therefore not ilustrated. Front wall panel 3 is secured to the remainder of resevoir 1 by screws 24. A peripheral sealing gasket 25 is compressed between flanges 26 and 27 formed on reservoir 1 and wall panel 3, respectively, to ensure hermetic closure. Screws 24 can be tightened and loosened by using a conventional socket wrench or the like. The readily accomplished removal of the amply dimensioned front wall panel 3 and baffle 14 gives unhampered access to the interior of reservoir 1 for periodic maintenance after previous discharge of water and other residual matter through discharge port 9. Any calcine incrustations may then be readily removed from the interior wall surfaces of reservoir 1 and from the outer surfaces of sensors 12, 13, the latter being located just inside of front wall 3. The cleaning of the casings of heater elements 22 is similarly facilitated by the fact that they remain attached to front wall panel 3 when it is removed from the remainder of reservoir 1.

A feature of the invention resides in the already mentioned rod 17. Since the calcine deposits are evenly formed on all surfaces in contact with the hot water, the deposit encountered after a given operating time of the steam generator on the immersed portion of rod 17 will have the same thickness as the deposits formed on the inner wall surfaces of reservoir 1 and on sensors 12 and 13. By lifting weighted lid 16 off tube 15 and inspecting the lower end of rod 17, the operator of the cooking oven is thus able to ascertain the proper time for one of the periodic maintenance inspections of the steam generator. At the same time the operator is enabled to determine whether or not the reservoir is filled with water to the proper level.

In addition to the various advantages explained above, the invention offers the further advantage that the box-shaped constriuction of the resevoir with its front wall formed by at least one removable panel permits the industrial production of a complete range of steam generators with different outputs by using one and the same removable front wall panel and varying the depth of the reservoir parallel to the plane of fig. 2.

In a further embodiment the rod 17 may be a separate part rather than being connected to lid 16.

## Claims

1. An atmospheric pressure steam generator, particularly a steam generator associated to a commercial cooking oven, comprising:
a reservoir (1) provided with:
means (8) for the controlled admission of water provenient from the main supply system;
means (18) permitting the flow of steam into the cooking chamber of the oven;
closable drain means (9) for discharging liquid or semi-liquid residues remaining therein at the end of cooking operations;
electric water heating elements (22); and
means (12,13) for monitoring and controlling the level of water within the reservoir; and wherein one side of said reservoir (1), preferably its front side, is formed by means (3) offering access to the interior of the reservoir, said water heating elements (22) being fixedly secured to said means;
**characterized by**
decalcifier means for the admissioned water,
unidirectional closure means (15,16) for venting excess steam pressure to the outside in the case of a sudden and considerable pressure rise above atmospheric pressure;
and a rod (17), preferably secured to a weighted lid (16) cooperating with a vertical pipe (15) to act as said excess steam pressure venting means, said rod (17) extending downwards into said reservoir (1) to a depth below the lowermost admissible water level (LI) therein.

2. An atmospheric pressure steam generator according to claim 1, **characterized in that** said access means is formed by at least one removable wall panel (3).

3. An atmospheric pressure steam generator according to claim 2, **characterized in that** said removable wall panel (3) is secured to the remainder of said reservoir (1) by releasable fastener means such as screws (24) or the like, with the interposition of a peripheral sealing gasket (25) to ensure hermetic closure.

## Patentansprüche

1. Dampferzeuger bei atmosphärischen Druck, insbesondere ein Dampferzeuger, der einem kommerziellen Kochofen zugeordnet ist, enthaltend:
einen Tank (1), versehen mit:
einer Einrichtung (8) für den gesteuerten Einlaß von Wasser, das von dem Wasserleitungsnetz stammt;
Einrichtungen (18), die die Dampfströmung in die Kochkammer des Ofens zulassen;
verschließbaren Ablaßeinrichtungen (9) zum Ablassen flüssiger oder halbflüssiger Reststoffe, die am Ende von Kochvorgängen darin verbleiben;
elektrischen Wasserheizelementen (22); und
Einrichtungen (12,13) zum Überwachen und Steuern des Wasserpegels innerhalb des Tanks; und wobei eine Seite des Tanks (1), vorzugsweise seine Vorderseite, von Einrichtungen (3) gebildet ist, die einen Zugang zum Innern des Tanks gewähren, wobei die Wasserheizelemente (22) fest an den genannten Einrichtungen angebracht sind;
**gekennzeichnet durch**
Entkalkungseinrichtungen für das Zulaufwasser;
Einwegverschließeinrichtungen (15,16) zum Ablassen übermäßigen Dampfdrucks nach außen im Falle eines plötzlichen und beachtlichen Druckanstieges über den Atmosphärendruck;
einen Stab (17), der vorzugsweise an einem gewichtsbelasteten Deckel (16) befestigt ist, der mit einem vertikalen Rohr (15) zusammenwirkt, um als die Dampfüberdruckablaßeinrichtung zu wirken, wobei der Stab (17) sich nach unten in den Tank (1) bis in eine Tiefe unter den niedrigst zulässigen Wasserpegel (LI) darin erstreckt.

2. Dampferzeuger bei Atmosphärendruck nach Anspruch 1, **dadurch gekennzeichnet, daß** die Zugangseinrichtung von wenigstens einer abnehmbaren Wandtafel (3) gebildet ist.

3. Dampferzeuger bei Atmosphärendruck nach Anspruch 2, **dadurch gekennzeichnet, daß** die abnehmbare Wandtafel (3) am Rest des Tanks (1) durch lösbare Befestigungseinrichtungen, wie beispielsweise Schrauben (24) oder dgl., unter Zwischenlage eines Umfangsdichtungsrings (25) zur Sicherstellung eines hermetischen Verschlusses befestigt ist.

## Revendications

1. Générateur de vapeur à pression atmosphérique , en particulier un générateur de vapeur associé à un four de cuisine commerciale, comprenant :
un réservoir (1) muni de :
moyens (8) pour l'admission contrôlée d'eau provenant du réseau de distribution générale ;
moyens (18) permettant l'écoulement de vapeur dans la chambre de cuisson du four ;
moyens de purge susceptibles d'être fermés (9) pour décharger des résidus liquides ou semi-liquides restant à l'intérieur à la fin des opérations de cuisson ;
éléments électriques chauffant l'eau (22) ; et
moyens (12, 13) pour surveiller et commander le niveau d'eau à l'intérieur du réservoir, et dans lequel un côté dudit réservoir (1), de préférence son côté avant, est formé de moyens (3) permettant l'accès à l'intérieur du réservoir, lesdits éléments chauffant l'eau (22) étant fermement attachés auxdits moyens ;
**caractérisé par**
des moyens de décalcification pour l'eau admise ;
des moyens de fermeture unidirectionnels (15, 16) destinés à purger l'excès de pression de vapeur vers l'extérieur dans le cas d'une augmentation de pression soudaine et considérable au-dessus de la pression atmosphérique ;
et une tige (17), de préférence fixée à un couvercle alourdi (16) qui coopère avec un tuyau vertical (15) pour agir en tant que lesdits moyens de purge pour l'excédent de vapeur de pression, ladite tige (17) s'étendant vers le bas pour arriver dans ledit réservoir (1) à une profondeur inférieure au niveau d'eau le plus bas permis (LI) à l'intérieur.

2. Générateur de vapeur à pression atmosphérique selon la revendication 1, **caractérisé en ce que** lesdits moyens d'accès sont formés d'au moins un panneau formant paroi amovible (3).

3. Générateur de vapeur à pression atmosphérique selon la revendication 2, **caractérisé en ce que** ledit panneau formant paroi amovible (3) est fixé au reste dudit réservoir (1) par des moyens de fixation amovibles tels que des vis (24) ou analogues, en intercalant un joint d'étanchéité périphérique (25) de manière à garantir toute fermeture hermétique.
